Europäisches Patentamt

European Patent Office

Office européen des brevets

(19)

(11) Veröffentlichungsnummer: **0 195 901**

**B1**

(12) **EUROPÄISCHE PATENTSCHRIFT**

(45) Veröffentlichungstag der Patentschrift: **24.10.90**

(51) Int. Cl.⁵: **F 16 F 9/02, F 16 F 9/36**

(21) Anmeldenummer: **86101449.6**

(22) Anmeldetag: **04.02.86**

(54) **Gasfeder.**

(30) Priorität: **29.03.85 DE 3511554**
**14.05.85 EP 85105915**

(43) Veröffentlichungstag der Anmeldung:
**01.10.86 Patentblatt 86/40**

(45) Bekanntmachung des Hinweises auf die
Patenterteilung:
**24.10.90 Patentblatt 90/43**

(84) Benannte Vertragsstaaten:
**AT IT NL**

(56) Entgegenhaltungen:
**DE-B-1 143 398**
**GB-A-2 088 994**
**US-A-1 718 323**
**US-A-2 554 581**
**US-A-3 171 643**
**US-A-3 379 430**

(73) Patentinhaber: **Krautkrämer, Hermann**
**Bachstrasse 11**
**D-5401 Bassenheim (DE)**

(72) Erfinder: **Krautkrämer, Hermann**
**Bachstrasse 11**
**D-5401 Bassenheim (DE)**

(74) Vertreter: **Selting, Günther, Dipl.-Ing. et al**
**Patentanwälte von Kreisler, Selting, Werner**
**Deichmannhaus am Hauptbahnhof**
**D-5000 Köln 1 (DE)**

**Beschreibung**

Die Erfindung betrifft eine Gasfeder nach dem Oberbegriff des Anspruchs 1.

Gasfedern der genannten Art sind beispielsweise bei Kraftfahrzeugen an Heckklappen, Kofferraumdeckeln oder Motorhauben angeordnet. Sie erleichtern das Hochklappen der Teile durch Gewichtsausgleich und — je nach Ausgestaltung — üben eine Dämpfungswirkung beim Zuklappen der Teile aus. Die Gasfedern sind mit einem Gas gefüllt, das unter einem erhöhten Druck steht, der zwischen 20 bar und — bei komprimierter Gasfeder — bis zu 180 bar beträgt.

Aus US—A—3 379 460, von der im Anspruch 1 ausgegangen wird, ist eine Gasfeder mit zwei ineinandergesteckten verschiebbar geführten Zylindern bekannt. Der äußere erste Zylinder weist an seiner stirnseitigen Öffnung in einem Bereich vergrößerten Durchmessers eine Gleitringdichtung auf, in der der innere zweite Zylinder geführt ist. An der stirnseitigen Öffnung dieses zweiten Zylinders ist ein erster Kolben angeordnet, der im ersten Zylinder axial gleitend angeordnet ist. Am Boden des ersten Zylinders ist eine Kolbenstange befestigt, die dichtend durch den ersten Kolben hindurch verläuft und an ihrem freien Ende einen zweiten Kolben trägt, der axial gleitend im zweiten Zylinder geführt ist. Die Auszugbewegung der beiden Zylinder wird dadurch begrenzt, daß der zweite Kolben gegen den ersten Kolben, der auch die stirnseitige Öffnung des zweiten Zylinders verschließt, anschlägt. Der erste Kolben ist durch mehrere von innen in die Innenwandung des zweiten Zylinders hineinragende Sprengringe mit dem zweiten Zylinder verankert bzw. verzahnt, während der zweite Kolben einen ringförmigen Innenvorsprung aufweist, der in eine Ringnut am Ende der Kolbenstange eingreift. Der Gleitring ist ebenfalls durch einen in eine Ringnut in der Innenwand des ersten Zylinders eintauchenden Sprengring gesichert. Diese Art der Verankerung des Gleitrings sowie der Kolben ist fertigungstechnisch relativ aufwendig.

Aus DE—B—1 143 398 ist eine weitere Gasfeder bekannt, bei der die Gleitringdichtung lediglich in die stirnseitige Öffnung des ersten Zylinders eingesteckt ist und folglich in dieser durch Haftreibung gehalten ist. Der erste Kolben ist auf die stirnseitige Öffnung des zweiten Zylinders aufgesteckt, wo er demzufolge auch lediglich aufgrund von Haftreibung befestigt ist. Eine Verankerung von Gleitring und Kolben ist bei dieser bekannten Gasfeder also nicht vorgesehen, weshalb die Gefahr besteht, daß sich beim Auseinanderbewegung der beiden Zylinder infolge des in diesen herrschenden erhöhten Gasdruckes Teile der Gasfeder, z.B. die Gleitringdichtung und der Kolben im ersten Zylinder, lösen und weggeschleudert werden. Die Folge hiervon können Personen- oder Sachbeschädigungen sein.

Der Erfindung liegt die Aufgabe zugrunde, eine Gasfeder mit einer vereinfachten Verankerung der die Auszugbewegung der Zylinder begrenzenden Teile zu schaffen.

Zur Lösung dieser Aufgabe ist erfindungsgemäß eine Gasfeder mit den Merkmalen des Anspruchs 1 vorgesehen; die Merkmale vorteilhafter Ausgestaltungen der Erfindung sind in den Unteransprüchen angegeben.

Nach der Erfindung ist die Gleitringdichtung mittels einer Bördelung im Bereich vergrößerten Durchmessers des ersten Zylinders angeordnet. Die — im Querschnitt betrachtet — nach innen vorstehende ringförmige Stirnfläche der Gleitringdichtung bildet dabei den Endanschlag zur Begrenzung der Auszugbewegung des inneren zweiten Zylinders aus dem äußeren ersten Zylinder. Diese Auszugbewegung wird dadurch begrenzt, daß die Stirnfläche des nach außen überstehenden ersten Kolbens gegen die Stirnfläche der Gleitringdichtung anschlägt. Die Gleitringdichtung bildet zusammen mit dem ersten Kolben einen relativ stabil ausgebildeten Endanschlag, der die Auszugbewegung der Gasfeder bei Zugbeanspruchung wirkungsvoll begrenzt. Die hierfür erforderliche feste Verankerung der Gleitringdichtung am ersten Zylinder erfolgt auf fertigungstechnisch einfache Weise durch Bördelung des ersten Zylinder.

Die erfindungsgemäße Gasfeder liefert also bei einem einfachen Aufbau ein Höchstmaß an Sicherheit im Falle von Überbeanspruchungen und Gewalteinwirkungen.

Gemäß einer vorteilhaften Weiterbildung der Erfindung wird eine mit der Arbeitsgeschwindigkeit progressive Dämpfungswirkung auf einfache Weise dadurch erreicht, daß der ersten Kolben als Dämpfungskolben ausgebildet ist, in dem seine Bohrung gegenüber der Kolbenstange einen vergrößerten Durchmesser aufweist, so daß sich zwischen der Kolbenstange und der Bohrung im ersten Kolben ein ringförmiger als Gasdrossel wirkender Spalt bildet.

Nachfolgend werden anhand der Figuren Ausführungsbeispiele der Erfindung näher erläutert.

Es zeigen.

Figur 1 eine Gasfeder im unbetätigten Zustand, im Schnitt;

Figur 2 die Gasfeder gemäß Figur 1 in belastetem, teilweise zusammengedrückten Zustand, im Schnitt;

Figur 3 eine Gasfeder mit zusätzlichen Sicherheitseinrichtungen wie Anschläge und Entlastungsbohrungen, im Schnitt;

Figur 3a einen Anschlagpuffer aus elastischem Material, im Schnitt;

Figur 4 eine Gasfeder mit anderer Ausgestaltung des Kolbens 4, sowie mit einer zusätzlichen Dichtung und einem Anschlagpuffer im Bereich der Gleitringdichtung 3, ebenfalls im Schnitt.

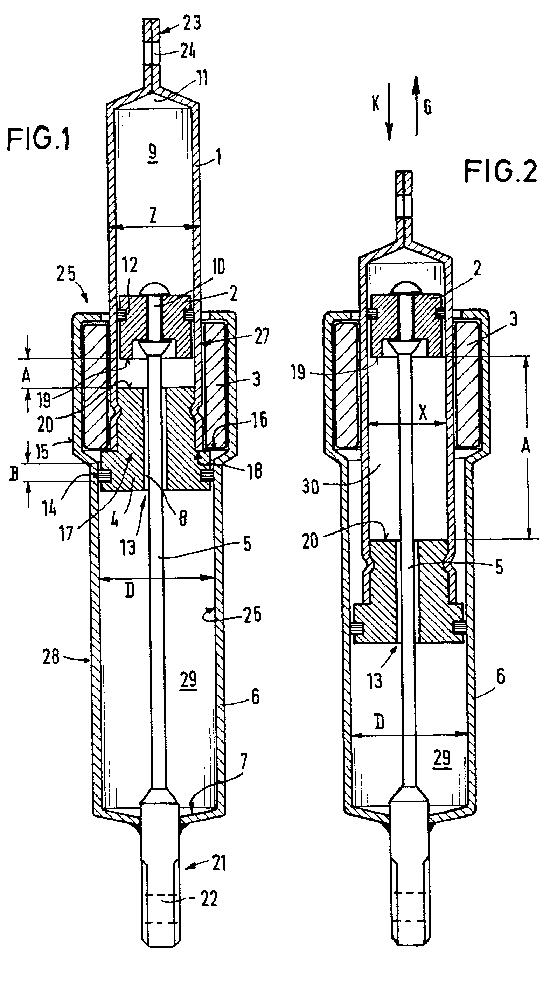

Aus der Zusammenschau der Figuren 1 und 2 ist erkennbar, daß die Gasfeder einen ersten Zylinder 6 mit geschlossenem Boden 7 aufweist, in welchem ein zweiter Zylinder 1 mit geschlossenem Boden 11 mittels einer Gleitringdichtung 3 axial beweglich geführt ist, und daß der zweite Zylinder einen mit dessen stirnseitiger Öffnung 17 verbundenen ersten Kolben 4 aufweist, der im ersten Zylinder 6 axial gleitbar angeordnet ist, und daß der erste Zylinder 6 eine an dessen Boden 7 befestigte, den Zylinder 6 mittig durchsetzende Kolbenstange 5 aufweist, welche durch eine Bohrung B des ersten Kolbens 4 hindurchtretend in den Innenraum 9 des zweiten Zylinders 1 hineinragt und an ihrem freien Ende 10 einen im zweiten Zylinder 1 axial beweglich geführten zweiten Kolben 2 trägt. Der erste Kolben 4 ist als Dämpfungskolben ausgebildet, indem die Bohrung 8 gegenüber der Kolbenstange 5 einen im Durchmesser um einen ringförmigen, als Gasdrossel wirkenden Spalt 13 vergrößerten Durchmesser aufweist. In erfindungswesentlicher Ausgestaltung ist der erste Kolben 4 im Außendurchmesser "D" wesentlich größer, als der Außendurchmesser "Z" des zweiten Zylinders 1. Die Durchmesserdifferenz kann beispielsweise annähernd 20% betragen. Die Kolben 2 bzw. 4 sind mit Dichtungen 12 bzw. 14 in den Zylindern 1 bzw. 6 mediendicht geführt. Erfindungswesentlich ist weiter die Anordnung der Gleitringdichtung 3 mit in axialer Richtung relativ langer Führungsbohrung 27, die eine sehr sichere koaxiale Führung der beiden Zylinder 1 und 6 ineinander gewährleistet. Diese Gleitringdichtung 3 ist in einem zylinderförmig vergrößerten Bereich 15 der Wand 28 des ersten Zylinders 6 angeordnet und mit einer Bördelung 25 darin fest verankert. Dabei ergibt sich infolge der vorgenannten Durchmesserdifferenz von "D" zu "Z" die Anordnung, daß die nach innen ringförmig in die Kolbenlauffläche 26 vorstehende stirnseitige Wandfläche 16 der Gleitringdichtung 3 und die an der stirnseitigen Öffnung 17 des zweiten Zylinders 1 nach außen vorkragende Stirnfläche 18 des ersten Kolbens 4 in Zusammenwirkung als Endanschläge der beiden Zylinder ausgebildet sind.

Im Falle einer gewaltsamen Zugbeanspruchung, beispielsweise infolge eines bei einem Verkehrsunfall hochschnellenden und dabei hohen Verzögerungskräften oder einer Knautschung ausgesetzten Kofferraumdeckels, findet die erfindungsgemäß ausgebildete Gasfeder mit Hilfe dieser sehr stabil ausgebildeten ersten Endanschläge 16, 18 eine zunächst begrenzte Endstellung.

Bei dieser weisen die einander entgegengesetzten Flächen 19 bzw. 20 der Kolben 2 bzw. 4 einen axialen Abstand "A" auf. Weiterhin weist der axiale Abstand der Dichtung 14 des ersten Kolbens 4 vom Bereich 15 vergößerten Durchmessers in dieser Endstellung einen axialen Abstand "B" auf.

Würde nun durch die besagte Gewalteinwirkung die Haltekraft der ersten Endanschläge beispielsweise durch Zerstörung der Bördelung 25 überfordert, so daß diese nachgeben, dann würde die Gasfeder nach der Erfindung eine zweite Endanschlag-Endstellung dadurch einnehmen können, daß die einander entgegengerichteten Flächen 19 bzw. 20 der Kolben 2 bzw. 4 aneinander zur Anlage kommen.

Hierfür ist in erfindungswesentlicher weiterer Ausgestaltung bezüglich Sicherheit vorgesehen,

daß der axiale Abstand "A" größer ist als der axiale Abstand "B".

Hierdurch wird bewirkt, daß bei Erreichung des zweiten Endanschlages die Dichtung 14 in den Bereich vergrößerten Durchmessers 15 eintritt, wodurch die Dichtwirkung aufgehoben und das im Druckraum 29 des ersten Zylinders 6 befindliche Druckgas gefahrlos entweichen könnte. Dabei wirkt in diesem Extremfall die Kolbenstange 5, welche mit dem zweiten Kolben 2 fest verbunden und ihrerseits im Boden 7 des ersten Zylinders fest verankert ist, als Zugstange, die ein explosionsartiges Auseinanderschießen der beiden Zylinder 1 und 6 verhindert und somit die Funktionssicherheit der Gasfeder weiter sehr wesentlich erhöht. Für den Fall, daß durch Gewalteinwirkung beispielsweise bei einem Unfall die Gasfeder weiter als vorgesehen über die Endlage im zusammengedrückten Zustand getaucht werden sollte, sind weitere Sicherheitseinrichtungen vorgesehen, um in einem solchen Falle die gefährlich überhöhte Druckenergie der Gasfüllung unschädlich zu vermindern.

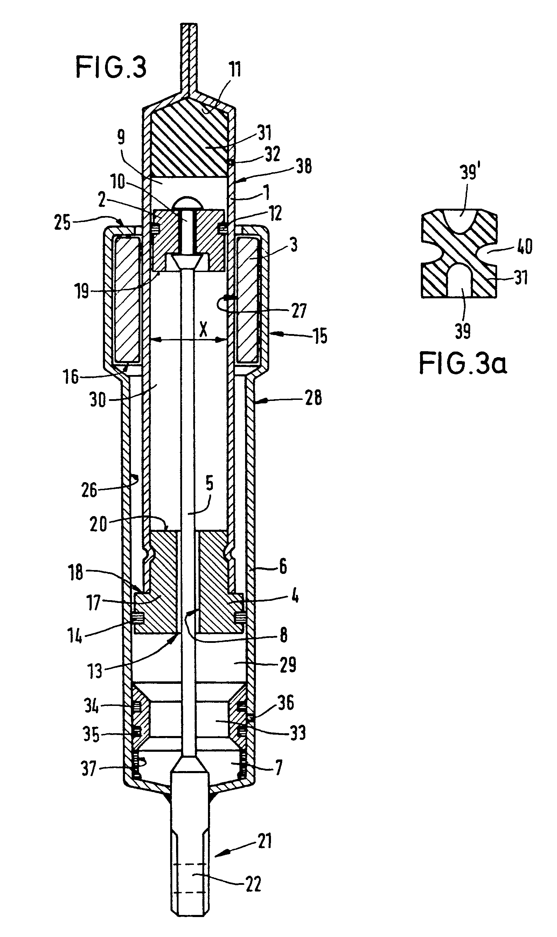

Hierfür ist vorgesehen, daß im zweiten Zylinder 1 im Bereich von dessen geschlossenem Boden 11 ein als Anschlagpuffer wirkendes, kompressibles Formteil 31 aus elastischem Material eingelegt ist, wobei das elastische Formteil 31 als federndes Rückstellelement aus Gummi oder Kunststoff ausgebildet ist, und daß im Bereich des geschlossenen Bodens 11 in der Wand 38 des zweiten Zylinders 1 eine Druckentlastungsbohrung 32 angeordnet und vom Formteil 31 in dessen unkomprimiertem Zustand überdeckt und damit mediendicht verschlossen ist. (Figur 3, 3a).

Die Ausbildung des elastischen Formteils 31 als federndes Rückstellelement aus Gummi oder Kunststoff zeigt Figur 3a. Das verwendete elastische Material Gummi oder Kunststoff besitzt beispielsweise einen Härtegrad entsprechend 60° Shore. Weil Gummi oder Kunststoff vom Material her inkommpressibel ist, wird beim gezeigten Ausführungsbeispiel gemäß Figur 3a die Nachgiebigkeit des elastischen Formteils durch eine Ausbildung als federndes Rückstellelement erreicht, indem dieses mit Ausnehmungen 39, 39' und einer umlaufenden Nut 40 in Form einer Gummifeder ausgebildet ist.

An Stelle einer solchen Ausbildung könnte ein Formteil 31 aus einem mit Gaseinschlüssen hergestellten Material gefertigt sein.

Eine zusätzliche, noch weitergehende Sicherheit gegen überhöhte Druckspitzen im Druckraum 29 des Kolbens 4 wird dadurch gewährleistet, daß im ersten Zylinder 6 im Bereich von dessen geschlossenem Boden 7 ein axial verschiebbarer, als Anschlag für den Kolben 4 vorgesehener Ring 33 angeordnet und mit einem ringförmigen Stützelement 37 gegen den Boden 7 beabstandet und abgestützt ist. Der Ring 33 ist weiterhin mit zwei im axialen Abstand angeordneten, an der Lauffläche 26 des Zylinders 6 abdichtend anliegenden Dichtungen 34, 35 ausgebildet.

Weiterhin ist in der Wand 28 des ersten Zylinders 6 im Abstand vom Boden 7 eine Entlastungsbohrung 36 vorgesehen und in einem solchen Abstand vom Boden zwischen den Dichtungen 34, 35 angeordnet, daß die Bohrung 36 bei unveränderter Lage des Ringes 33 mediendicht verschlossen ist.

Die beschriebenen zusätzlichen Sicherheitseinrichtungen bewirken bei gewaltsamem Zusammenstauchen der Gasfeder, daß einerseits im Innenraum 9 des zweiten Zylinders 1 die sich aufbauende Druckspitze das kompressible Formteil 31 zusammendrückt, wobei Gas über die Bohrung 32 aus dem Druckraum 9 entweichen kann.

Der gleiche gewaltsame Stauchprozeß der Gasfeder bewirkt andererseits, daß der erste Kolben 4 am Ring 33 aufschlägt und diesen unter Verformung des Stützelementes 37 gegen den Boden des ersten Zylinders 6 verschiebt. Dabei gelangt die Entlastungsbohrung 36 aus dem Bereich der beiden Dichtungen 34 und 35 des Ringes 33, und somit kann ebenfalls aus dem Druckraum 29 der gefährlich hohe Gasdruck abgeblasen werden.

Mithin erweist sich, daß die Gasfeder nach der Erfindung, insbesondere durch die Anordnung der beschriebenen zusätzlichen Sicherheitseinrichtungen, im Falle von Gewalteinwirkung, sei es durch Stauchung oder Zerrung, ein Höchstmaß an Sicherheit bietet.

Die Funktion der Gasfeder nach der Erfindung, die sich für den Fachmann aus der Zusammenschau der Figuren 1 und 2 ohne weiteres ergibt, kann im übrigen wie folgt beschrieben werden:

Im entspannten Zustand gemäß Figur 1 herrscht im Zylinderraum 29 des ersten Zylinders 6 und im Zylinderraum 9 des zweiten Zylinders 1 eine vorgegebene Gasspannung, welche die Federkonstante der Gasfeder bestimmt. Es kann sich dabei um Drücke zwischen beipielsweise 1 bar und 50 bar handeln. Dabei ist die Feder zwischen den Anschlußaugen 22 und 24 zur Ausübung einer Rückstellkraft zwischen zwei kinematisch bewegbaren Gelenken (nicht dargestellt) angelenkt. Bei auftretender Belastung durch eine die Federkraft übersteigende äußere, in axialer Richtung wirkende Kraft "K" wird die Feder gemäß Figur 2 zusammengedrückt. Dabei gleitet der erste Kolben 4 entlang der Lauffläche 26 des ersten Zylinders 6 gegen den Boden 7 zu in den ersten Zylinder 6 hinein und verdrängt dabei ein Volumenanteil der Gasfüllung. Unter Druckerhöhung entweicht ein Teil der dadurch verdrängten Gasfüllung durch den Drosselspalt 13 in den Raum 30, der sich zwischen den relativ zueinander auseinanderbewegenden Stirnflächen 19 und 20 mit der Bewegung des ersten und zweiten Kolbens 4 bzw. 2 vergrößert. Entsprechend wächst der Abstand "A" zwischen den beiden Flächen 19 und 20. Hierbei ergibt sich infolge der Differenz zwischen Durchmesser "D" (Innendurchmesser des ersten Zylinders 6) und Durchmesser "X" (Innendurchmesser des zweiten Zylinders I) eine mit zunehmender Zusammenschiebung der Gasfeder zunehmende Verkleinerung des Gesamtvolumens der beiden Innenräume 29 und 30, und damit eine Erhöhung der Arbeitsspannung des gasförmigen Druckmediums in diesen beiden Räumen.

Gleichzeitig wird der Gasraum 9 des zweiten Zylinders 1 verringert und damit die Arbeitsspannung des darin befindlichen gasförmigen Druckmediums entsprechend erhöht. Demgemäß steigt die Gegenkraft "G" welche die Gasfeder de Kraft "K" entgegensetzt.

Beim Nachlassen de Kraft "K" sucht sich die Gasfeder wieder zu entspannen. Dies geschieht in umgekehrter Richtung unter Verkleinerung des Abstandes "A". Hierdurch wird der Gasraum 30 zwischen den Kolbenstirnflächen 19 und 20 verkleinert und Gas aus dem Raum verdrängt.

Um in den sich vergrößernden Gasraum 29 zu gelangen muß das verdrängte Gas aus dem Raum 30 den Drosselspalt 13 in umgekehrter Richtung durchströmen und bewirkt damit eine insbesondere in der Endphase der Bewegung progressive Dämpfung der Auseinandergleitbewegung der beiden Zylinder 1 und 6.

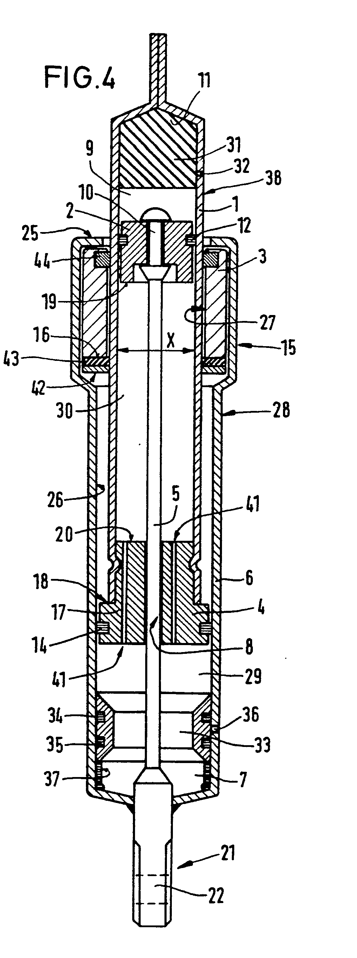

Die beispielhaft gezeigte und beschriebene Gasfeder umfaßt gemäß Figur 4 in einer weiterentwickelten Form und Ausgestaltung noch einige die Funktion und Sicherheit verbessernden Details. So ist beispielsweise in die Gleitringdichtung 3 an ihrem der Bördelung 25 zugewandten Ende ein gleitend an der äußeren Wandung des zweiten Zylinders 1 anliegendes ringförmiges Dichtelement 44 zusätzlich vorgesehen, welches das Eindringen von Feuchtigkeit und oder Schmutz in den Ringraum zwischen der inneren Wandung des Zylinders 6 und der äußeren Wandung des Zylinders 1 sicher verhindert.

Dies ist wichtig, um in diesem Raum Kondensatbildung zu verhindern, durch welche sonst bei Minustemperaturen eine Blockierung der Gasfeder verursacht werden könnte.

Eine weitere Ausgestaltung sieht vor, daß anstelle des Drosselspalts zwischen Bohrung 8 des Kolbens 4 und Kolbenstange 5 dort eine Feinpassung vorgesehen und der Kolben 4 mit wenigstens einer Drosselbohrung 41 als Dämpfungskolben ausgebildet ist. Als Vorteil egibt sich einerseits eine bessere Fühung der ineinander gleitenden Teile 5 und 8, als auch eine exaktere Einstellbarkeit der Drossel- bzw. Dämpfungswirkung.

Und schließlich ist als weitere Ausgestaltung vorgesehen, daß der stirnseitigen Wandfläche 16 der Gleitringdichtung 3 ein Pufferpaket bestehend aus einem vorzugsweise metallischen Anschlagring 42 und einem Zwischenring 43 aus vorzugsweise elastischem Material zugeordnet ist. Hierdruch wird bewirkt, daß im Falle eines relativ harten Endanschlagstoßes die auf die Kolbenflächen 18 bzw. Endanschlagfläche 16 wirkenden Schläge vermindert werden, was der besseren Sicherheit gegenüber einer gewaltsamen Zerstörung dienlich ist. Die einfach Gasfeder nach der Erfindung ist einfach aufgebaut, besitzt infolge der vorgenannten, die Sicherheit gewährleistenden Merkmale ein überraschend hohes Maß sowohl an Funktions- als auch an Bruchsicherheit, besitzt ein hohes Maß an Dämpfung, insbesondere gegen Ende der Streckbewegung zu, und ist darüberhinaus in fertigungstechnischer Hinsicht sehr günstig konzipiert.

Mithin kann von einer optimalen Lösung der eingangs genannten Aufgabenstellung gesprochen werden.

**Patentansprüche**

1. Gasfeder mit einem mit Gas gefüllten ersten Zylinder (6) mit geschlossenem Boden (7), in dem ein zweiter Zylinder (1) mit geschlossenem Boden (11) mittels einer mit dem ersten Zylinder (6) verbundenen Gleitringdichtung (3) axial beweglich geführt ist, die im ersten Zylinder (6) in einem Bereich (15) vergrößerten Durchmessers angeordnet ist,

einem mit der stirnseitigen Öffnung (17) des zweiten Zylinders (1) verbundenen ersten Kolben (4), der im ersten Zylinder axial gleitend angeordnet ist, und

einer am Boden (7) des ersten Zylinders (6) befestigten Kolbenstange (5), die sich durch eine Bohrung des ersten Kolbens (4) hindurch erstreckt und an ihrem freien Ende (10) einen im zweiten Zylinder (1) axial beweglich geführten zweiten Kolben (2) aufweist,

dadurch gekennzeichnet, daß die Gleitringdichtung (3) mittels einer Bördelung (25) im Bereich (15) vergrößerten Durchmessers des ersten Zylinders (6) fest verankert ist und

daß die nach innen ringförmig vorstehende Stirnfläche (16) der Gleitringdichtung (3) und die nach außen überstehende Stirnfläche (18) des ersten Kolbens (4) die Endanschläge zum Begrenzen der Auszugbewegung der beiden Zylinder (6, 1) bilden.

2. Gasfeder nach Anspruch 1, dadurch gekennzeichnet, daß der erste Kolben (4) als Dämpfungskolben ausgebildet ist, indem die Bohrung (8) gegenüber der Kolbenstange (5) einen im Durchmesser um einen ringförmigen, als Gasdrossel wirkenden Spalt (13) vergrößerten Durchmesser aufweist.

3. Gasfeder nach Anspruch 1, dadurch gekennzeichnet, daß die Bohrung (8) im ersten Kolben (4) und die Kolbenstange (5) miteinander eine Feinpassung bilden und daß der erste Kolben (4) wenigstens eine durchgehende, achsparallele, als Gasdrossel wirkende Bohrung (41) aufweist.

4. Gasfeder nach den Ansprüchen 1 bis 3, dadurch gekennzeichnet, daß der Außendurchmesser (D) des ersten Kolbens (4) wesentlich größer ist, als der Außendurchmesser (z) des zweiten Zylinders (1).

5. Gasfeder nach Anspruch 4, dadurch gekennzeichnet, daß der Außendurchmesser (D) des ersten Kolbens (4) annähernd um 20 % größer ist als der Außendurchmesser (Z) des zweiten Zylinders (1). 6.

Gasfeder nach einem oder mehreren der Ansprüche 1 bis 5, dadurch gekennzeichnet, daß der erste und der zweite Kolben (2, 4) mittels Dichtungsringen (12, 14) in dem jeweiligen Zylinder (1, 6) geführt ist.

7. Gasfeder nach einem der Ansprüche 1 bis 6, dadurch gekennzeichnet, daß die Gleitringdichtung (3) an ihrem der Bördelung (25) zugewandten Ende ein gleitend an der äußeren Wandung des zweiten Zylinders (1) anliegendes ringförmiges Dichtelement (44) aufweist.

8. Gasfeder nach einem oder mehreren der Ansprüche 1 bis 7, dadurch gekennzeichnet, daß an der Stirnfläche (16) der Gleitringdichtung (3) ein Zwischenring (43) aus elastischem Material und auf diesem ein metallischer Anschlagring (42) angeordnet sind.

9. Gasfeder nach einem oder mehreren der Ansprüche 1 bis 8, dadurch gekennzeichnet, daß die einander entgegengerichteten Flächen (19, 20) der beiden Kolben (2, 4) in durch die Endanschläge (16, 18) begrenzter Endstellung einen axialen Abstand (A) zueinander aufweisen.

10. Gasfeder nach einem der Ansprüche 6 bis 9, dadurch gekennzeichnet, daß der Dichtungring (14) des ersten Kolbens (4) in der Endstellung einen axialen Abstand (B) vom Bereich (15) vergrößerten Durchmessers des ersten Zylinders (6) aufweist.

11. Gasfeder nach Anspruch 10, dadurch gekennzeichnet, daß der Abstand (B) des Dichtungsrings (14) vom Bereich (15) vergrößerten Durchmessers kleiner als der Abstand (A) zwischen den entgegengerichteten Flächen (19, 20) der beiden Kolben (2, 4) ist.

12. Gasfeder nach einem oder mehreren der Ansprüche 1 bis 11, dadurch gekennzeichnet, daß im zweiten Zylinder (1) im Bereich von dessen geschlossenem Boden (11) ein als Überdruckventil wirkendes, kompressibles Formteil (31) aus elastischem Material eingelegt ist.

13. Gasfeder nach Anspruch 12, dadurch gekennzeichnet, daß das kompressible Formteil (31) als federndes Rückstellelement aus Gummi oder Kunststoff ausgebildet ist.

14. Gasfeder nach Anspruch 12 oder 13, dadurch gekennzeichnet, daß im Bereich des geschlossenen Bodens (11) in der Wand (38) des zweiten Zylinders (1) eine Druckentlastungsbohrung (32) angeordnet und vom kompressiblen elastischen Formteil (31) in dessen entspanntem Zustand überdeckt und damit mediendicht verschlossen ist.

15. Gasfeder nach einem oder mehreren der Ansprüche 1 bis 14, dadurch gekennzeichnet, daß im ersten Zylinder (6) im Bereich von dessen geschlossenen Boden (7) ein axial verschiebbarer, als Anschlag für den Kolben (4) vorgesehener Ring (33) angeordnet ist, der mit einem ringförmigen Stützelement (37) gegen den Boden (7) beabstandet und abgestützt ist.

16. Gasfeder nach Anspruch 15, dadurch gekennzeichnet, daß der Ring (33) zwei im axialen Abstand zueinander angeordnete, an der Lauffläche (26) des Zylinders (6) abdichtend anliegende Dichtungsringe (34, 35) aufweist.

17. Gasfeder nach Anspruch 16, dadurch gekennzeichnet, daß in der Wand (28) des ersten Zylinders (6) im Abstand vom Boden (7) eine Entlastungsbohrung (36) vorgesehen ist und in einem solchen Abstand vom Boden (7) zwischen den Dichtungsringen (34, 35) angeordnet ist, daß sie bei unveränderter Lage des Ringes (33) mediendicht verschlossen ist.

18. Gasfeder nach einem oder mehreren der Ansprüche 1 bis 17, dadurch gekennzeichnet, daß die Kolbenstange (5) des ersten Zylinders (6) ein durch dessen Boden (7) nach außen herausragendes Endteil (21) aufweist, das mit einem Befestigungsauge (22) ausgebildet ist.

19. Gasfeder nach einem oder mehreren der Ansprüche 1 bis 18, dadurch gekennzeichnet, daß der geschlossene Bodenbereich (11) des zweiten Zylinders (1) als eine nach außen gerade vorstehende Pratze (23) mit einem darin angeordneten Befestigungsauge (24) ausgebildet ist.

**Revendications**

1. Ressort à gaz, avec
un premier cylindre (6) rempli de gaz, à fond (7) fermé, dans lequel est guidé, suivant un mouvement axial, un second cylindre (1) à fond fermé (11), à l'aide d'un joint d'étanchéité circulaire coulissant (3) relié au premier cylindre (6), disposé dans le premier cylindre (6), dans une zone (15) à diamètre agrandi,
un premier piston (4), relié à l'ouverture (17) du côté avant du second cylindre (1), disposé dans le premier cylindre de manière à coulisser axialement, et
une tige de piston (5), fixée au fond (7) du premier cylindre (6), passant par un alésage du premier piston (4) et présentant, à son extrémité libre (10), un second piston (2) guidé, suivant un mouvement axial, dans le second cylindre (1), caractérisé par le fait:
que le joint d'étanchéité circulaire coulissant (3) est ancré fermement, par emboutissage des bords (25), dans la zone (15) à diamètre agrandi du premier cylindre (6), et
que la face frontale (16) annulaire, tournée vers l'intérieur, du joint d'étanchéité circulaire coulissant (3) et la face frontale (18) du premier piston (4) qui déborde vers l'extérieur forment les butées d'extrémité pour limiter le mouvement de sortie des deux cylindres (6, 1).

2. Ressort à gaz selon la revendication 1, caractérisé par le fait que le premier piston (4) se présente sous forme d'un piston amortisseur, par le fait que l'alésage (8) relativement à la tige de piston (5) présente, diamétralement, un diamètre agrandi autour d'un intervalle (13) agissant comme étrangleur du gaz.

3. Ressort à gaz selon la revendication 1, caractérisé par le fait que l'alésage (8) dans le premier piston (4) et la tige de piston (5) forment entre eux un ajustement de précision et que le premier piston (4) présente au moins un alésage, sur toute sa longueur, parallèle à son axe, agissant comme étrangleur du gaz.

4. Ressort à gaz selon les revendications 1 à 3, caractérisé par le fait que le diamètre extérieur (D) du premier piston (4) est sensiblement supérieur au diamètre extérieur (Z) du second cylindre (1).

5. Ressort à gaz selon la revendication 4, caractérisé par le fait que le diamètre extérieur (D) du premier piston (4) est approximativement de 20% supérieur au diamètre extérieur (Z) du second cylindre (1).

6. Ressort à gaz selon l'une ou plusieurs des revendications 1 à 5, caractérisé par le fait que le premier et le second pistons (2, 4) sont guidés dans le cylindre correspondant (1, 6) à l'aide de bagues d'étanchéité (12, 14).

7. Ressort à gaz selon l'une des revendications 1 à 6, caractérisé par le fait que le joint d'étanchéité annulaire coulissant (3) présente, à son extrémité tourné vers l'emboutissage des bords (25), un élément d'étanchéité (44) annulaire s'appuyant, de manière coulissante, sur la paroi extérieure du second cylindre (1).

8. Ressort à gaz selon l'une ou plusieurs des revendications 1 à 7, caractérisé par le fait qu'il est disposé, à la face frontale (16) du joint d'étanchéité annulaire coulissant (3), une bague intermédiaire (43) en un matériau élastique et, sur cette dernière, une bague de butée (42) métallique.

9. Ressort à gaz selon l'une ou plusieurs des revendications 1 à 8, caractérisé par le fait que les faces (19, 20) opposées l'une à l'autre des deux pistons (2, 4) présentent entre eux, dans la position extrême délimitée par les butées d'extrémité (16, 18), une distance axiale (A).

10. Ressort à gaz selon l'une des revendications 6 à 9, caractérisé par le fait que la bague d'étanchéité (14) du premier piston (4) présente, en position extrême, une distance axiale (B) par rapport à la zone (15) de diamètre agrandi du premier cylindre (6).

11. Ressort à gaz suivant la revendication 10, caractérisé par le fait que la distance (B) entre la bague d'étanchéité (14) et la zone (15) de diamètre agrandi est inférieure à la distance (A) entre les faces (19, 20) opposées l'une à l'autre des deux pistons (2, 4).

12. Ressort à gaz selon l'une ou plusieurs des revendications 1 à 11, caractérisé par le fait qu'il est placé dans le second cylindre (1), à l'endroit de son fond fermé (11) une pièce formée compressible (31) en un matériau élastique, agissant comme soupape de surpression.

13. Ressort à gaz selon la revendication 12, caractérisé par le fait que la pièce formée compressible (31) se présente sous forme d'un élément de rappel, en caoutchouc ou en matière plastique, à effet de ressort.

14. Ressort à gaz selon la revendication 12 ou 13, caractérisé par le fait qu'un alésage de détente de pression (32) est disposé, à l'endroit du fond fermé (11), dans la paroi (38) du second cylindre (1), est recouvert par la pièce formé compressible (31), à l'état détendu de celle-ci, et, est, de ce fait fermé de manière étanche au fluide.

15. Ressort à gaz selon l'une ou plusieurs des revendications 1 à 14, caractérisé par le fait que dans le premier cylindre (6), à l'endroit de son fond fermé (7), est disposée une bague (33) pouvant se déplacer axialement, prévue comme butée pour le piston (4), bague qui est écartée du fond (7) et s'appuie sur ce dernier par un élément de support annulaire (37).

16. Ressort à gaz selon la revendication 15, caractérisé par le fait que la bague (33) présente deux bagues d'étanchéité (34, 35) disposées avec entre elles une distance axiale, s'appuyant de manière étanche sur la face de glissement (26) du cylindre (6).

17. Ressort à gaz suivant la revendication 16, caractérisé par le fait qu'il est prévu, dans la paroi (28) du premier cylindre (6), à une distance du fond (7), un alésage de détente (36) disposé à une distance telle du fond (7), entre les bagues d'étanchéité (34, 35) qu'il est, en position inchangée de la bague (33), formé de manière étanche au fluide.

18. Ressort à gaz selon l'une ou plusieurs des revendications 1 à 17, caractérisé par le fait que la tige de piston (5) du premier cylindre (6) présente une partie d'extrémité (21) faisant saillie vers l'extérieur, à travers son fond (7), partie d'extrémité qui est fermée avec un oeillet de fixation (22).

19. Ressort à gaz selon l'une ou plusieurs des revendications 1 à 18, caractérisé par le fait que la zone du fond fermé (11) du second cylindre (1) se présente sous forme d'une bride (23) disposée en relief droit vers l'éxtérieur et comportant un oeillet de fixation (24).

**Claims**

1. Pneumatic spring comprising a first cylinder (6) filled with gas and having a closed bottom (7), wherein a second cylinder (1) with a closed bottom (11) is guided for axial movement by a slide ring sealing (3) being connected to said first cylinder (6) and being arranged in the first cylinder (6) in an area (15) of enlarged diameter, a first piston (4) being connected with the front-end opening (17) of the second cylinder (1) and being arranged axially slideable in the first cylinder, and a piston rod (5) connected to the bottom (7) of the first cylinder (6), said piston rod (5) extending through a bore of the first piston (4) and having its free end (10) provided with a second piston (2) being guided for axial movement within the second cylinder (1), characterized in that the slide ring sealing (3) is fixedly secured by a flange portion (25) arranged in the area (15) of enlarged diameter of the first cylinder (6), and that the end face (16) of the slide ring sealing (3), projecting annularly inwardly, and the outwardly projecting end face (18) of the first piston (4) form the limit stops for limiting the extension movement of the two cylinders (6, 1).

2. Pneumatic spring according to claim 1, characterized in that the first piston (4) is arranged as a damping piston by the bore (8), relatively to the piston rod (5), having its diameter enlarged by an annular gap (13) acting as a gas throttle.

3. Pneumatic spring according to claim 1, characterized in that the bore (8) in the first piston (4) and the piston rod (5) form a close fit with each other and that the first piston (4) is provided with at least one continuous, axis-parallel bore (41) acting as a gas throttle.

4. Pneumatic spring according to any one of claims 1 to 3, characterized in that the outer diameter (D) of the first piston (4) is considerably larger than the outer diameter (Z) of the second cylinder (1).

5. Pneumatic spring according to claim 4, characterized in that the outer diameter (D) of the first piston (4) is by substantially 20% larger than the outer diameter (Z) of the second cylinder (1).

6. Pneumatic spring according to one or a plurality of claims 1 to 5, characterized in that the first and second pistons (2, 4) are guided in the respective cylinder (1, 6) by sealing rings (12, 14).

7. Pneumatic spring according to any one of claims 1 to 6, characterized in that the slide ring sealing (3), at the end thereof facing the flange portion (25), is provided with an annular sealing element (44) slideably abutting the outer wall of the second cylinder (1).

8. Pneumatic spring according to one or a plurality of claims 1 to 7, characterized in that an intermediate ring (43) of an elastic material is arranged at the end face (16) of the slide ring sealing (3) and a metallic stop ring (42) is arranged at said intermediate ring (43).

9. Pneumatic spring according to one or a plurality of claims 1 to 8, characterized in that the opposite faces (19, 20) of the two pistons (2, 4), in their end position defined by the limit stops (16, 18), have an axial distance (A) to each other.

10. Pneumatic spring according to any one of claims 6 to 9, characterized in that the sealing ring (14) of the first piston (4) in the end position thereof has an axial distance (B) from the area (15) of the first cylinder (6) of enlarged diameter.

11. Pneumatic spring according to claim 10, characterized in that the distance (B) of the sealing ring (14) from the area (15) of enlarged diameter is smaller than the distance (A) between the opposite faces (19, 20) of the two pistons (2, 4).

12. Pneumatic spring according to one or a plurality of claims 1 to 11, characterized in that the second cylinder (1), in the area of the closed bottom (11) thereof, has inserted therein a compressible shaped member (31) made of elastic material and acting as an overpressure valve.

13. Pneumatic spring according to claim 12, characterized in that the compressible shaped member (31) is arranged as a resilient restoring element made of rubber or plastics material.

14. Pneumatic spring according to claim 12 or 13, characterized in that a pressure-relief bore (32) is arranged in the area of the closed bottom (11) in the wall (38) of the second cylinder (1) and is covered by the compressible elastic shaped member (31) in the untensioned condition thereof and thus is tightly closed against media.

15. Pneumatic spring according to one or a plurality of claims 1 to 14, characterized in that in the first cylinder (6), in the area of its closed bottom (7), there is arranged an axially displaceable ring (33) which is provided as a stopper for the piston (4) and, by an annular support element (37), is distanced from and supported by the bottom (7).

16. Pneumatic spring according to claim 15, characterized in that the ring (33) is provided with two sealing rings (34, 35) arranged at an axial distance to each other and sealingly abutting the sliding surface (26) of the cylinder (6).

17. Pneumatic spring according to claim 16, characterized in that a relief bore (36), being distanced from the bottom (7), is provided in the wall (28) of the first cylinder (6) and is arranged between the sealing rings (34, 35) at such a distance from the bottom (7) that, while the position of the ring (33) is unchanged, the relief bore (36) is tightly closed against media.

18. Pneumatic spring according to one or a plurality of claims 1 to 17, characterized in that the piston rod (5) of the first cylinder (6) has an end portion (21) protruding outwardly through the bottom (7) thereof and being provided with a fastening eye (22).

19. Pneumatic spring according to one or a plurality of claims 1 to 18, characterized in that the closed bottom portion (11) of the second cylinder (1) is arranged as an outwardly protruding claw (23) with a fastening eye (24) formed therein.

FIG.1

FIG.2

FIG.3

FIG.3a

FIG.4